# EUROPEAN PATENT SPECIFICATION

(11) **EP 0 700 976 B1**
(45) Date of publication and mention of the grant of the patent: **16.12.1998**
(21) Application number: 95305633.0
(22) Date of filing: 11.08.1995
(51) Int. Cl.: C09D 5/02, C09D 7/12, C09C 1/36

(54) **Aqueous paint compositions**
Wässrige Lackzusammensetzungen
Compositions de peinture aqueuse

(30) Priority: 08.09.1994 GB 9418127; 16.05.1995 GB 9510110
(43) Date of publication of application: 13.03.1996
(73) Proprietor: TIOXIDE GROUP SERVICES LIMITED, London W14 0QL (GB)
(72) Inventor: Trendell, Michael John, Yarm, Cleveland TS15 9TL (GB); Drury, Kevin, Stockton on Tees, Cleveland TS18 4AY (GB); Rutherford, Daniel James, Yarm, Cleveland TS15 9RL (GB); Hodge, John Christopher William, Richmond, N. Yorks DL11 7NA (GB); Robson, Keith, Whitesmocks, Durham DH1 4LN (GB)
(74) Representative: Jackson, John Derek

(56) References cited:
- EP-A- 0 113 435
- EP-A- 0 549 163
- WO-A-93/12183

## Description

The invention relates to aqueous paint compositions and, in particular, to aqueous paint compositions containing structured composite pigments.

In general, the hiding power of a pigmented dried paint film increases as the proportion of pigment in the film increases. However, in most paint systems, crowding of particles of effective pigments such as titanium dioxide decreases the hiding efficiency so that the hiding achieved is not linearly related to the amount of pigment present. Further, when the volume concentration of pigments within the paint film is high the film integrity can be reduced as there is insufficient polymeric binder present to fill the interstices between the pigment particles. Consequently, properties such as stain and scrub resistance are compromised.

Recently, a number of methods have been disclosed for the preparation of structured composite pigmentary materials in which particulate pigments are associated with "spacer" particles in such a way that the pigment is more uniformly distributed in systems containing these composite materials. The relative size of the "spacer" particles compared to the size of the pigment particles is an important parameter of these structured composite pigmentary materials. Mathematical modelling using a Monte Carlo method to predict spatial distribution of pigment particles associated with "spacer" particles of various sizes has predicted that the optimum size of"spacer" particles for common inorganic pigments (e.g. titanium dioxide pigments) is in the range 0.05 to 0.10 micrometre.

Generally, this theory has been found to be upheld in many paint systems. However, it has now been found that in systems having a relatively high pigment volume concentration particles of polymeric materials having a larger size produce paints with a higher opacity.

It is an object of this invention to provide a novel paint composition in which the efficiency of use of the pigments and the amount of particulate material present in the dried paint film is high but the paint film nevertheless retains desirable properties.

According to the invention, an aqueous paint composition comprises an aqueous emulsion of a film-forming first organic polymer and a composite pigment comprising a structured composite of inorganic pigmentary particles and particles of a second organic polymer, said second organic polymer being a non-film-forming polymer, wherein said aqueous paint composition has a particulate volume concentration greater than 55 per cent.

The term "pigment volume concentration" is widely used in the paints and coatings industries as a measure of the proportion of a dried paint film, by volume, which consists of pigmentary particles. The term is frequently used as a measure of the proportion of all components in the film which are not derived from the film-forming polymer. Consequently, components which are generally not considered pigmentary, such as extenders and non-pigmentary rigid polymer beads, are included when the pigment volume concentration is calculated. In this invention the more precise term "particulate volume concentration" is used to indicate that the volume being measured is the total volume of all particulate solids including pigments, particles of organic polymer and other inorganic particles such as extender particles. Where appropriate, the term "pigment volume concentration" is used to refer to the volume of the pigmentary particles alone.

The paint composition of the invention contains an aqueous emulsion of a film-forming first organic polymer. The term "film-forming polymer" is generally used in the paint and coatings industry to describe a polymer which , when used as a binder in a paint composition, is able to coalesce and form a coherent film under the conditions used to dry an applied paint film. Normally, the paint film is allowed to dry at ambient temperature without additional heat being provided to assist film formation. However, polymers which require heating to promote coalescence and film formation are suitable for use in the composition of this invention. Usually the film-forming first organic polymer will have a minimum film-forming temperature (MFFT) as measured according to ASTM D2354 of less than 25°C. Preferably, the MFFT is between 0°C and 20°C.

Generally, any film-forming organic polymer emulsion which is of use in aqueous emulsion paints is suitable for use in the paint compositions of the invention. Preferred emulsions include emulsions of acrylic polymers, polyvinyl acetate and copolymers such as styrene/butadiene, vinyl acetate/acrylates, styrene acrylics, vinyl acetate/versatate and chlorinated copolymers.

A structured composite pigment is present in the paint compositions of the invention. This composite pigment is formed from particles of inorganic pigment and particles of an organic polymer which are associated in a structure which assists in producing optimum dispersion of the pigment particles in a dried paint film. It is believed that the polymeric particles act as "spacers" to reduce homoflocculation of the pigmentary particles during drying of the paint film. A number of such structured composites have been described recently and these composites are of use in the compositions of this invention. For example PCT Patent Application WO 90/01516 describes composite particles comprising inorganic opacifier particles adhered to or embedded in the surface of thermoplastic microspheres, PCT Patent Application WO 91/01798 describes organised powders which are produced by bringing together component particles under atomising conditions, European Patent Application EP 0 549 163 describes polymer-modified titanium dioxide in which polymer particles are chemically bonded to a polymeric water-soluble compound containing moieties which are adsorbable onto titanium dioxide, PCT Application WO 93/11183 describes a process for preparing mixed dispersions by adjusting the zeta potentials of the component particles and PCT Application WO 93/12183 describes composite particles in which the polymeric particulate component is prepared by specified emulsion polymerisation processes. Preferably, however, the structured composite is prepared by a process as described in UK Patent Application GB 2 267 503. In accordance with GB 2 267 503, a structured composite of use in this invention is formed by the interaction of a dispersion of inorganic pigmentary particles having a surface charge with particles of an organic polymer having an opposite surface charge and the particulate components of the composite are held in association by the opposite surface charges on the particles. Typically, a dispersion of an inorganic pigment at a pH at which the particles thereof have a positive surface charge (for example, pH 4) is mixed with a dispersion of polymeric particles at the same pH, the polymeric particles having a negative surface charge. When the composite is formed at a pH value of, for example, 4 the pH of the dispersion of composite particles is usually subsequently adjusted to a pH similar to that normally used for formulating aqueous emulsion paints. When an adjustment is made, the pH of the dispersion is usually adjusted to a value in the range 7 to 9.

The inorganic particles which are one component of the structured composite are particles of an inorganic compound which is useful as a pigment. Inorganic pigments which are of use include titanium dioxide pigments, zinc oxide pigments, antimony oxides, barium pigments, calcium pigments, zirconium pigments, chromium pigments, iron pigments, magnesium pigments, lead pigments, zinc sulphide and lithopone. Preferably, the inorganic pigment is a titanium dioxide pigment and, most preferably, is rutile titanium dioxide.

The particles of inorganic pigment can be uncoated but they can also have a coating such as is common in the pigment art. For example, commercially available titanium dioxide pigmentary particles normally have a coating of a compound such as an inorganic oxide, a phosphate or a silicate. For example, titanium dioxide coated with an oxide of aluminium, silicon, zirconium or titanium is suitable for use in forming the structured composite used in the paint composition of the invention.

The particle size of the inorganic pigmentary particles is such as to optimise the pigmentary properties of the structured composite. For titanium dioxide, the parameter generally considered to most affect the pigmentary properties is crystal size which is preferably between 0.05 and 0.50 micrometre. For anatase titanium dioxide the average crystal size is most preferably between 0.10 and 0.35 micrometre and for rutile titanium dioxide the most preferred average crystal size is between 0.20 and 0.30 micrometre.

The second organic polymer particles which are a component of the structured composite are formed from an organic polymer which is defined as "non-film forming". This term is to be understood in relation to the technique by which the paint of the invention is designed to be applied. Many paints according to the invention will be designed to dry at ambient temperatures without the deliberate application of heat but included within the scope of the invention are paint compositions which are designed to be dried by heating. The polymer particles used in the structured composite do not coalesce to form a film under the conditions in which the paint is designed to dry. For paints which are designed to dry at ambient temperatures, the second organic polymer particles preferably have a glass transition temperature greater than 30°C. Most preferably, the glass transition temperature is greater than 50°C.

The second organic polymer particles may comprise solid particles of the polymer but particles which contain vesicles or which are hollow are also suitable. When vesiculated or hollow polymer particles are used they generally contribute to the opacity of a dry paint film due to the presence of air within the particles.

A large number of polymers and copolymers can be used to prepare the second organic polymer particles and the person skilled in the art will readily be able to select suitable polymers based on an appropriate glass transition temperature. Polymers and copolymers of ethylenically unsaturated monomers such as styrene, divinyl benzene, butadiene, vinyl chloride, acrylonitrile, acrylic esters such as methyl methacrylate and methyl acrylate, ethylene, propylene and tetrafluoroethylene are suitable as are condensation polymers such as polyesters, polyester amides, polyurethanes and urea-aldehyde resins. The glass transition temperature of the polymeric particles can be increased by introducing cross-links into the polymer.

The particle size of the second organic polymer particles is selected according to the desired properties of the paint film after drying. When the paint is designed to produce good scrub resistance at a high particulate volume concentration it is preferable to utilise particles of second organic polymer having a relatively small size. The preferred size will depend upon the nature of the inorganic pigmentary particles but, generally, the second organic polymer particles will have an average size in the range 0.02 to 0.30 micrometre. When pigmentary titanium dioxide is used as the inorganic pigmentary component the preferred average size for the second organic polymeric particles is from 0.02 to 0.20 micrometre when optimum stain and scrub resistance is desired and most preferably the average size is from 0.03 to 0.10 micrometre for optimum stain and scrub resistance.

However, the opacity of a paint film formed from a composition according to the invention has been found, surprisingly, to be improved when second organic polymer particles having a somewhat larger particle size are utilised in the composite pigment. For optimum opacity the average size of the second organic polymer particles is generally between 0.20 and 0.50 micrometre although the preferred size depends to some extent on the nature and size of the inorganic pigmentary particles. Usually, the preferred average particle size is between 0.20 and 0.40 micrometre. When pigmentary titanium dioxide is used the preferred average size of the particles of second organic polymer is in the range 0.20 to 0.30 micrometre. Generally, when these larger second organic polymer particles are used, the paint film has a poorer scrub resistance than when smaller second organic polymer particles are used.

The proportions of second organic polymer particles and inorganic pigmentary particles in the composite are also selected to optimise pigmentary efficiency for the chosen paint system and depend upon the relative sizes and the nature of the component particles. One preferred composite comprises pigmentary rutile titanium dioxide having an average crystal size between 0.20 and 0.30 micrometre and polystyrene particles having an average size between 0.08 and 0.12 micrometre in which the ratio of polystyrene to titanium dioxide, by volume, is between 0.3:1 and 2.6:1. Preferably the ratio is from 0.5:1 to 1.5:1 by volume. A second preferred composite comprises similar particles of titanium dioxide and polystyrene particles having an average size between 0.04 and 0.08 micrometre in which the ratio of polystyrene to titanium dioxide is from 0.1:1 to 1.3:1 by volume. Preferably the ratio in this second preferred composite is from 0.3:1 to 1:1 by volume. A third preferred composite, utilising polystyrene beads having an average particle size in the range 0.20 to 0.40 micrometre and rutile titanium dioxide having an average crystal size between 0.20 and 0.30 micrometre has a ratio of polystyrene beads to titanium dioxide between 0.4:1 and 3.0:1 by volume. Preferably, in this third preferred composite, the ratio of polystyrene to titanium dioxide is less than 1.5:1 by volume and, frequently, no opacity advantage is observed when the polystyrene to titanium dioxide ratio is greater than 1:1 by volume

The paint composition of the invention has a particulate volume concentration of at least 55 per cent. The preferred particulate volume concentration for the paint compositions of the invention based on second organic polymer particles having an average size from 0.02 to 0.20 micrometre is from 60 per cent to 90 per cent. Most preferably, the particulate volume concentration for this embodiment is from 60 per cent to 80 per cent. When the paint composition is based on composite pigments using polymeric particles with an average size in the range 0.20 to 0.50 micrometre the preferred particulate volume concentration for the paint compositions of the invention is from 60 per cent to 80 per cent. Most preferably, the particulate volume concentration is from 65 per cent to 75 per cent when these larger particles are used.

Particulate volume concentration is a measure of the volume of particulates (pigment, polymeric particles and other particulate material) present in a dried paint film formed from the paint composition. Usually, the paint compositions of the invention will contain particulate inorganic compounds known as extenders in addition to the structured composite pigment. Suitable extenders are those compounds conventionally used in aqueous emulsion paints such as silica, silicates, aluminates, sulphates, carbonates and clays.

The paint compositions of the invention may also contain particulate pigments such as titanium dioxide, zinc oxide and other compounds described heretofore as pigments as well as organic pigments added in a conventional manner without the prior formation of a structured composite pigment. Polymeric particles which can be solid or vesiculated may also be added without prior formation of a structured composite pigment.

A wide range of proportions of particulate materials can be present in the paint compositions of the invention but, generally, the total amount of inorganic pigment present, as composite and otherwise, is sufficient to produce a pigment volume concentration (pvc) in a dry film of from 5 per cent to 30 per cent, the total amount of polymeric particles present, as composite and otherwise, is sufficient to produce a polymeric particle (or bead) volume concentration (bvc) in a dry paint film of from 5 per cent to 20 per cent and the amount of extender present is sufficient to produce an extender volume concentration (evc) in a dry paint film of from 15 per cent to 70 per cent. When the average size of the second organic polymer particles is in the range 0.02 to 0.20 micrometre, the pvc is preferably in the range 7 per cent to 25 per cent, the bvc is preferably in the range 10 per cent to 20 per cent and the evc is preferably in the range 20 per cent to 50 per cent. When the average size of the second organic polymer particles is in the range 0.20 to 0.40 micrometre the pvc is preferably in the range 5 per cent to 25 per cent and more preferably is in the range 10 per cent to 20 per cent, the bvc is preferably in the range 5 per cent to 20 per cent and more preferably in the range 7 per cent to 15 per cent and the evc is preferably in the range 30 per cent to 60 per cent and more preferably in the range 40 per cent to 50 per cent.

Frequently, the paint compositions of the invention will also contain other components conventionally added to aid the formulation of aqueous emulsion paints such as dispersants, antifoaming agents, wetting agents, coalescing solvents and fungicides.

The structure inherent in the composite pigments used in the paints of the invention leads to improved dispersion of the inorganic pigment in a dry paint film in comparison with conventional paints. In addition, the presence of the polymeric particles assists in allowing paints to be formulated at high particulate volume concentrations without compromising the properties of the finished paint film. Generally, it is possible to formulate a paint having similar stain resistance to a known paint but having a higher particulate volume concentration and an improved opacity. The opacity of paints containing composite pigments using larger particles of second organic polymer is generally higher but the scrub resistance of paints containing composite pigments using smaller particles of second organic pigment is generally higher.

The invention is illustrated by the following examples.

### EXAMPLE 1

100 kg of titanium dioxide pigment sold under the Trade Name TIOXIDE TR92 was dispersed, using a high speed dispersion mill, in 59.9 kg of water having a pH of 4.5 and dilute hydrochloric acid was added to maintain the pH at 4.5. A dispersion of polystyrene beads (49.3% solids by weight) having an average particle size of 100 nm was adjusted to a pH of 4.5. 37.7 kg of this dispersion were mixed with the titanium dioxide dispersion by pumping the two dispersions simultaneously through a T-piece. After mixing, the product was stirred for 10 minutes, the pH was raised to 8.5 with dilute ammonium hydroxide and then the product dispersion was milled for 2 minutes. Analysis showed the product to be a structured composite pigment with a ratio of polystyrene particles to pigment particles of 0.78 to 1 by volume.

A number of matt paints having particulate volume concentrations in the range 60 to 85% were prepared using this composite pigment. For comparison with these test paints a series of control paints were prepared using conventional extenders. Each paint according to the invention was compared with a conventional paint formulated to have the same titanium dioxide content, the same percentage volume solids and with the intention of matching the stain resistance. For each of the six paints contrast ratio was measured using a Morest Chart on which paint films had been drawn down with a No.6 K-bar and staining was assessed on an arbitrary scale of 1 to 10 (10 being the highest degree of staining) using Gilsonite. The paints were formulated as detailed below in Table 1.

All the test paints contained the same concentration of titanium dioxide but were formulated at higher particulate volume concentrations than the comparative control paint. However, the contrast ratio of each test paint is significantly higher than the control and the stain resistance of the test paints is lower than that of the control paints.

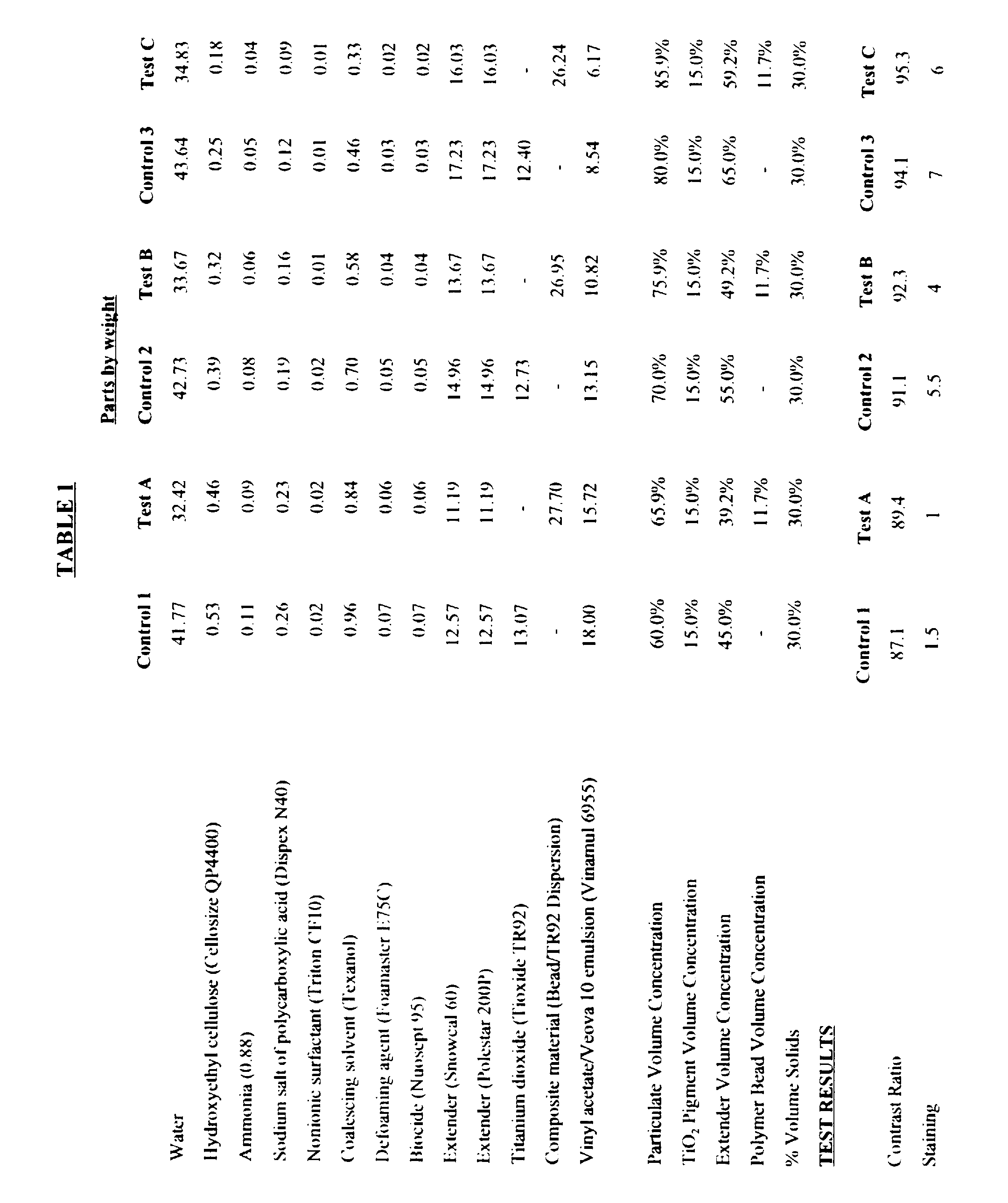

### EXAMPLE 2

100 kg of titanium dioxide pigment sold under the Trade Name TIOXIDE TR92 was dispersed, using a high speed dispersion mill, in 59.9 kg of water having a pH of 4.5 and dilute hydrochloric acid was added to maintain the pH at 4.5 A dispersion of polystyrene beads (49.3% solids by weight) having an average particle size of 100 nm was adjusted to a pH of 4.5. 37.7 kg of this dispersion were mixed with the titanium dioxide dispersion by pumping the two dispersions simultaneously through a T-piece. After mixing, the product was stirred for 10 minutes, the pH was raised to 8.5 with dilute ammonium hydroxide and then the dispersion was milled for two further minutes. Analysis showed this product to be a structured composite pigment with a ratio of polystyrene particles to pigment particles of 0.78:1 by volume.

A matt paint was prepared using this composite pigment and comparative paints were also prepared using only titanium dioxide pigment or titanium dioxide pigment plus polystyrene beads but without forming a structured composite pigment. The paint according to the invention was compared with these comparative paints which were formulated to have the same titanium dioxide content, the same percentage solids and with the intention of matching the stain resistance. For each of the paints, contrast ratio (CR) and reflectance over black (R_{B}) were measured at constant spreading rates (20 m²/l) by drawing down films on a polyester (Melinex) film using wire-wound applicator bars and allowing the films to dry before determining the values of CR and R_{B} with a Pacific Scientific Colorgard Colorimeter. Staining was assessed on an arbitrary scale of 1 to 10 (10 being the higher degree of staining) using Gilsonite and scrub resistance was determined on a similar arbitrary scale of 1 to 10 (10 being the lowest resistance to scrubbing) by scrubbing with 10% detergent solution using a Research Equipment Ltd scrub machine. The paints were formulated as detailed below in Table 2.

**TABLE 2**

| | **Parts by weight** | | |
|---|---|---|---|
| | **Control 4A** | **Test D** | **Control 4B** |
| Water | 42.73 | 33.99 | 42.72 |
| Hydroxyethyl cellulose (Cellosize QP4400) | 0.39 | 0.28 | 0.26 |
| Ammonia (0.88) | 0.08 | 0.06 | 0.05 |
| Sodium salt of polycarboxylic acid (Dispex N40) | 0.19 | 0.14 | 0.13 |
| Nonionic surfactant (Triton CF10) | 0.02 | 0.01 | 0.01 |
| Coalescing solvent (Texanol) | 0.70 | 0.51 | 0.48 |
| Defoaming agent (Foamaster E75C) | 0.05 | 0.04 | 0.04 |
| Biocide (Acticide BX) | 0.05 | 0.04 | 0.04 |
| Extender (Snowcal 60) | 14.96 | 14.33 | 14.60 |
| Extender (Polestar 200P) | 14.96 | 14.33 | 14.60 |
| Titanium dioxide (Tioxide TR92) | 12.73 | - | 12.73 |
| Composite material (Bead/TR92 Dispersion) | - | 26.76 | - |
| Polystyrene Beads (49.3% solids) | - | - | 5.35 |
| Vinyl acetate/Veova 10 emulsion (Vinamul 6955) | 13.15 | 9.52 | 8.98 |
| | | | |
| Particulate Volume Concentration | 70.0% | 78.2% | 79.4% |
| TiO₂ Pigment Volume Concentration | 15.0% | 15.0% | 15.0% |
| Extender Volume Concentration | 55.0% | 51.5% | 52.7% |
| Polymer Bead Volume Concentration | - | 11.7% | 11.7% |
| % Volume Solids | 30.0% | 30.0% | 30.0% |

| **TEST RESULTS** | | | |
|---|---|---|---|
| | **Control 4A** | **Test D** | **Control 4B** |
| Contrast Ratio at 20m²/l | 92.6 | 94.3 | 92.8 |
| Reflectance over black at 20m²/l | 82.8 | 85.2 | 83.0 |
| Staining Assessment | 6 | 5.5 | 4.5 |
| Scrub Resistance Assessment | 5 | 5 | 6 |

### EXAMPLE 3

516g of titanium dioxide pigment sold under the Trade Name TIOXIDE TR92 was dispersed in 508g water at a pH of 4.5, the pH being adjusted with dilute hydrochloric acid. The pH of a dispersion containing 48% by weight polystyrene beads having an average particle size of 0.24 micrometre and sold under the Trade Name Dow DPP 711E was adjusted to 4.5 and 200g of this dispersion were mixed with the titanium dioxide dispersion by simultaneously pouring the two dispersions into a beaker and gently agitating the mixture. When mixing was complete the product was stirred for a further 5 minutes using a saw-tooth impeller stirrer operating at low speed. The pH of the dispersion of composite product was then adjusted to 8.5 with dilute ammonium hydroxide which was added whilst the dispersion was stirred with a spatula and the product was finally mixed to ensure homogeneity with a low speed agitator. Analysis of the product (COMPOSITE A) showed a ratio of polystyrene particles (beads) to pigment of 0.65:1 by volume.

A second composite pigment (COMPOSITE B) was prepared, for comparison, using a similar procedure but utilising a dispersion containing 49% by weight polystyrene beads having an average particle size of 0.06 micrometre. The product had a ratio of beads to pigment of 0.69:1 by volume.

The composite pigments were used to prepare matt paints having a high particulate volume concentration. Control paints were prepared having the same percentage volume solids and the same titanium dioxide content and with the intention of having the same stain resistance as the paints containing the composite pigments. The paint formulations are given in Table 3

**TABLE 3**

| | **Parts by weight** | | | |
|---|---|---|---|---|
| | **Control 5** | **Test E** | **Control 6** | **Test F** |
| Water | 41.71 | 26.00 | 40.66 | 24.33 |
| Hydroxyethyl cellulose (Cellosize QP4400) | 0.38 | 0.31 | 0.50 | 0.44 |
| Ammonia (0.88) | 0.17 | 0.14 | 0.23 | 0.21 |
| Sodium salt of polycarboxylic acid (Dispex N40) | 0.22 | 0.18 | 0.30 | 0.26 |
| Nonionic surfactant (Triton CF10) | 0.02 | 0.02 | 0.02 | 0.02 |
| Coalescing solvent (Texanol) | 0.83 | 0.68 | 1.09 | 0.97 |
| Defoaming agent (Foamaster E75C) | 0.06 | 0.05 | 0.08 | 0.07 |
| Biocide (Acticide BX) | 0.06 | 0.05 | 0.08 | 0.07 |
| Extender (Snowcal 60) | 12.87 | 11.80 | 10.41 | 8.99 |
| Extender (Polestar 200P) | 12.87 | 11.80 | 10.41 | 8.99 |
| Titanium dioxide (Tioxide TR92) | 15.39 | - | 15.81 | - |
| Composite dispersion (Bead/Titanium dioxide) | - | 36.36 | - | 37.50 |
| Vinyl acetate/Veova 10 emulsion (Vinamul 6955) | 15.43 | 12.61 | 20.40 | 18.15 |
| | | | | |
| Particulate Volume Concentration | 65.0% | 72.0% | 55.0% | 60.9% |
| TiO₂ Pigment Volume Concentration | 18.0% | 18.0% | 18.0% | 18.0% |
| Extender Volume Concentration | 47.0% | 42.3% | 37.0% | 31.2% |
| Polymer Bead Volume Concentration | - | 11.7% | - | 11.7% |
| % Volume Solids | 30.0% | 30.0% | 30.0% | 30.0% |

For each of the paints contast ratio (CR) and reflectance over black (R_{B}) were measured by drawing down films on a polyester (Melinex) film using wire-wound applicator bars and allowing the films to dry before determining the values of CR and R_{B} with a Pacific Scientific Colorgard Colorimeter Staining was assessed on an arbitrary scale of 1 to 10 (10 being the highest degree of staining) using Gilsonite. Results are shown in Table 4.

**TABLE 4**

| **PAINT** | | | | | | |
|---|---|---|---|---|---|---|
| | **Control 5** | **Test E** | | **Control 6** | **Test F** | |
| | | **Composite A** | **Composite B** | | **Composite A** | **Composite B** |
| CR at 20m²/l | 92.0 | 94.1 | 93.5 | 87.5 | 89.7 | 89.3 |
| R_{B} at 20m²/l | 81.8 | 84.7 | 84.4 | 76.9 | 79.3 | 78.9 |
| Staining | 4 | 4 | 4 | 4 | 4 | 4 |

### EXAMPLE 4

A composite pigment (COMPOSITE C) was prepared in a similar manner to the composite pigments of Example 3 but using a dispersion of 301g titanium dioxide (TIOXIDE TR92) in 291g water which was mixed with 250g of the dispersion of 0.24 micrometre polystyrene particles (Dow DPP711E). Analysis showed a ratio of beads to pigment of 1.48:1 by volume.

A further composite pigment (COMPOSITE D) was prepared in a similar manner but using a dispersion of 241g titanium dioxide (TIOXIDE TR92) in 81g water which was mixed with 400g of the dispersion of 0.24 micrometre polystyrene particles (Dow DPP 711E). Analysis showed a ratio of beads to pigment of 2.90:1 by volume.

These composite pigments were used to prepare matt paints having the formulations shown in Table 5, COMPOSITE C being used to prepare Test paint G and COMPOSITE D being used to prepare Test paint H. As in Example 3, these paints were prepared with the intention of matching stain resistance at the same pigment volume concentration and volume solids content.

**TABLE 5**

| | **Parts by weight** | | |
|---|---|---|---|
| | **Control 7** | **Test G** | **Test H** |
| Water | 553.0 | 357.8 | 283.5 |
| Hydroxyethyl cellulose (Cellosize QP4400) | 5.0 | 5.0 | 5.0 |
| Ammonia (0.88) | 2.3 | 2.3 | 2.3 |
| Sodium salt of polycarboxylic acid (Dispex N40) | 3.0 | 3.0 | 3.0 |
| Nonionic surfactant (Triton CF10) | 0.2 | 0.2 | 0.2 |
| Coalescing solvent (Texanol) | 11.03 | 11.0 | 11.0 |
| Defoaming agent (Foamaster E75C) | 0.8 | 0.8 | 0.8 |
| Biocide (Acticide BX) | 0.8 | 0.8 | 0.8 |
| Extender (Snowcal 60) | 170.6 | 121.0 | 12.3 |
| Extender (Polestar 200P) | 170.6 | 121.0 | 12.3 |
| Titanium dioxide (Tioxide TR92) | 204.0 | - | - |
| Composite dispersion (Bead/Titanium dioxide) | - | 697.5 | 920.0 |
| Vinyl acetate/Veova 10 emulsion (Vinamul 6955) | 204.6 | 204.6 | 204.6 |
| | | | |
| Particulate Volume Concentration | 65.0% | 71.7% | 72.8% |
| TiO₂ Pigment Volume Concentration | 18.0% | 18.0% | 18.0% |
| Extender Volume Concentration | 47.0% | 27.0% | 2.6% |
| Polymer Bead Volume Concentration | - | 26.7% | 52.2% |
| % Volume Solids | 30.0% | 30.0% | 30.0% |

The properties of the paints were measured as described in Example 3 and compared to the paint designated 'Test E' containing COMPOSITE B and described in Example 3. The results are given in Table 6.

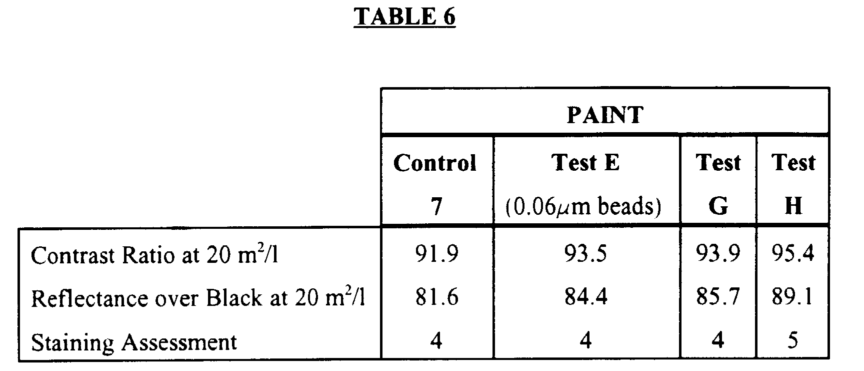

### EXAMPLE 5

Composite pigments were prepared from a 49% by weight dispersion of polystyrene beads having an average size of 0.45 micrometre (sold under the Trade Name Dow DPP 722E) using the method described in Example 3.

COMPOSITE E was prepared from a dispersion of 396g titanium dioxide (TIOXIDE TR92) in 237g water which was mixed with 150g of the polystyrene dispersion. The bead to pigment ratio was found to be 0.70:1 by volume.

COMPOSITE F was prepared from a dispersion of 308g titanium dioxide (TIOXIDE TR92) in 160g water which was mixed with 250g of the polystyrene dispersion. The bead to pigment ratio was found to be 1.46:1 by volume.

COMPOSITE G was prepared from 0.06 micrometre beads in a similar manner to COMPOSITE B of Example 3 except that COMPOSITE G had a bead to pigment ratio of 0.73:1 by volume.

These composite pigments were used to prepare matt paints as shown in Table 7. COMPOSITE E was used to prepare Test I, COMPOSITE F was used to prepare Test J and COMPOSITE G was used to prepare Test K. As in Example 3, these paints were formulated with the intention of matching stain resistance, pigment volume concentration and volume solids content.

**TABLE 7**

| | **Parts by weight** | | | |
|---|---|---|---|---|
| | **Control 8** | **Test I** | **Test J** | **Test K** |
| Water | 553.0 | 548.5 | 498.2 | 561.8 |
| Hydroxyethyl cellulose (Cellosize QP4400) | 5.0 | 5.0 | 5.0 | 5.0 |
| Ammonia (0.88) | 2.3 | 2.3 | 2.3 | 2.3 |
| Sodium salt of polycarboxylic acid (Dispex N40) | 3.0 | 3.0 | 3.0 | 3.0 |
| Nonionic surfactant (Triton CF10) | 0.2 | 0.2 | 0.2 | 0.2 |
| Coalescing solvent (Texanol) | 11.0 | 11.0 | 11.0 | 11.0 |
| Defoaming agent (Foamaster E75C) | 0.8 | 0.8 | 0.8 | 0.8 |
| Biocide (Acticide BX) | 0.8 | 0.8 | 0.8 | 0.8 |
| Extender (Snowcal 60) | 170.6 | 199.3 | 134.9 | 196.8 |
| Extender (Polestar 200P) | 170.6 | 199.3 | 134.9 | 196.8 |
| Titanium dioxide (Tioxide TR92) | 204.0 | - | - | - |
| Composite dispersion (Bead/titanium dioxide) | - | 510.8 | 613.5 | 499.1 |
| Vinyl acetate/Veova 10 emulsion (Vinamul 6955) | 204.6 | 204.6 | 204.6 | 204.6 |
| | | | | |
| Particulate Volume Concentration | 65.0% | 73.0% | 73.0% | 73.0% |
| TiO₂ Pigment Volume Concentration | 18.0% | 18.0% | 18.0% | 18.0% |
| Extender Volume Concentration | 47.0% | 42.4% | 28.7% | 41.8% |
| Polymer Bead Volume Concentration | - | 12.6% | 26.3% | 13.2% |
| % Volume Solids | 30.0% | 30.0% | 30.0% | 30.0% |

The properties of these paints were measured as described in Example 3 and the results are given in Table 8.

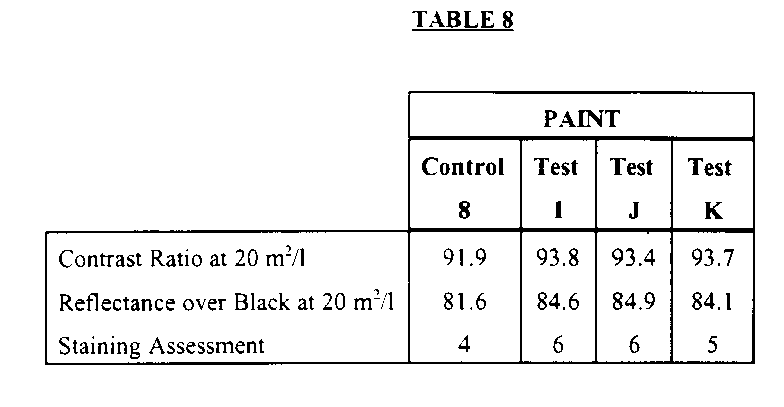

## Claims

1. An aqueous paint composition comprising an aqueous emulsion of a film-forming first organic polymer and a composite pigment characterised in that the composite pigment is a structured composite of inorganic pigmentary particles and particles of a second organic polymer, said second organic polymer being a non-film-forming polymer and said aqueous paint composition has a particulate volume concentration greater than 55 per cent.

2. An aqueous paint composition according to claim 1 characterised in that the film-forming first organic polymer has a minimum film-forming temperature as measured according to ASTM D2354 of less than 25°C.

3. An aqueous paint composition according to claim 1 or 2 characterised in that the structured composite is formed by the interaction of a dispersion of inorganic pigmentary particles having a surface charge with particles of an organic polymer having an opposite surface charge to form a dispersion of a structured composite in which the particulate components are held in association by the opposite surface charges on the particles.

4. An aqueous paint composition according to claim 3 characterised in that the pH of the dispersion of structured composite is adjusted to a value in the range 7 to 9 after the structured composite is formed.

5. An aqueous paint composition according to any one of the preceding claims characterised in that the inorganic pigmentary particles are particles of rutile titanium dioxide.

6. An aqueous paint composition according to any one of the preceding claims characterised in that the inorganic pigmentary particles are particles of titanium dioxide having a coating of an inorganic oxide, a phosphate or a silicate.

7. An aqueous paint composition according to any one of claims 1 to 4 characterised in that the inorganic pigmentary particles are particles of anatase titanium dioxide having an average crystal size between 0.10 and 0.35 micrometre.

8. An aqueous paint composition according to any one of the preceding claims characterised in that the inorganic pigmentary particles are particles of rutile titanium dioxide having an average crystal size between 0.20 and 0.30 micrometre.

9. An aqueous paint composition according to any one of the preceding claims characterised in that the second organic polymer has a glass transition temperature greater than 30°C.

10. An aqueous paint composition according to any one of the preceding claims characterised in that the particles of second organic polymer are vesiculated or hollow.

11. An aqueous paint composition according to any one of the preceding claims characterised in that the particles of second organic polymer have an average size in the range 0.02 to 0.30 micrometre.

12. An aqueous paint composition according to any one of the preceding claims characterised in that the inorganic pigmentary particles are particles of titanium dioxide and the particles of second organic polymer have an average size from 0.02 to 0.20 micrometre.

13. An aqueous paint composition according to any one of claims 1 to 10 characterised in that the particles of second organic polymer have an average size between 0.20 and 0.50 micrometre.

14. An aqueous paint composition according to claim 8 characterised in that the particles of second organic polymer are polystyrene particles having an average size between 0.08 and 0.12 micrometre and the ratio of polystyrene to titanium dioxide in the composite pigment is from 0.3:1 to 2.6:1 by volume.

15. An aqueous paint composition according to claim 8 characterised in that the particles of second organic polymer are polystyrene particles having an average particle size between 0.04 and 0.08 micrometre and the ratio of polystyrene to titanium dioxide in the composite pigment is from 0.1:1 to 1.3:1 by volume.

16. An aqueous paint composition according to claim 8 characterised in that the particles of second organic polymer are polystyrene particles having an average particle size between 0.20 and 0.40 micrometre and the ratio of polystyrene to titanium dioxide in the composite pigment is from 0.4:1 to 3.0:1 by volume.

17. An aqueous paint composition according to claim 1 characterised in that the particles of second organic polymeric particles have an average size from 0.02 to 0.20 microns and the paint has a particulate volume concentration from 60 per cent to 90 per cent.

18. An aqueous paint compostion according to Claim 1 characterised in that the particles of second organic polymer have an average size in the range 0.20 to 0.50 micrometre and the paint has a particulate volume concentration of from 60 per cent to 80 per cent.

19. An aqueous paint composition according to any one of the preceding claims characterised in that the paint contains silica, a silicate, an aluminate, a sulphate, a carbonate or a clay.

20. An aqueous paint composition according to any one of the preceding claims characterised in that the paint has a pigment volume concentration from 5 per cent to 30 per cent, a bead volume concentration from 5 per cent to 20 per cent and an extender volume concentration from 15 per cent to 70 per cent.

21. An aqueous paint composition according to claim I characterised in that the particles of second organic polymer have an average particle size in the range 0.02 to 0.20 micrometre and the paint has a pigment volume concentration in the range 7 per cent to 25 per cent, a bead volume concentration in the range 10 per cent to 20 per cent and an extender volume concentration in the range 20 per cent to 50 per cent.

22. An aqueous paint composition according to claim 1 characterised in that the particles of second organic polymer have an average particle size in the range 0.20 to 0.40 micrometre and the paint has a pigment volume concentration in the range 5 to 25 per cent, a bead volume concentration in the range 7 per cent to 15 per cent and an extender volume concentration in the range 30 per cent to 60 per cent.

## Patentansprüche

1. Wäßrige Farbzusammensetzung, umfassend eine wäßrige Emulsion eines filmbildenden ersten organischen Polymers und eines
Verbundpigments,
dadurch gekennzeichnet,
daß das Verbundpigment ein strukturierter Verbund von anorganischen Pigmentteilchen und Teilchen eines zweiten organischen Polymers ist, wobei das zweite organische Polymer ein nicht filmbildendes Polymer ist und die wäßrige Farbzusammensetzung eine Partikel-Volumenkonzentration größer als 55 Prozent aufweist.

2. Wäßrige Farbzusammensetzung nach Anspruch 1,
dadurch gekennzeichnet,
daß das filmbildende erste organische Polymer eine minimale Filmbildetemperatur, wie gemäß ASTM D2354 gemessen, von weniger als 25 °C aufweist.

3. Wäßrige Farbzusammensetzung nach Anspruch 1 oder 2,
dadurch gekennzeichnet,
daß der strukturierte Verbund durch die Wechselwirkung einer Dispersion von anorganischen Pigmentpartikeln mit einer Oberflächenladung mit Teilchen eines organischen Polymers mit entgegengesetzter Oberflächenladung gebildet ist, um eine Dispersion eines strukturierten Verbunds zu bilden, in dem die teilchenförmigen Bestandteile durch die entgegengesetzten Oberflächenladungen auf den Teilchen in Verbindung gehalten werden.

4. Wäßrige Farbzusammensetzung nach Anspruch 3,
dadurch gekennzeichnet,
daß der pH-Wert der Dispersion des strukturierten Verbunds auf einen Wert im Bereich von 7 bis 9 eingestellt ist, nachdem der strukturierte Verbund gebildet ist.

5. Wäßrige Farbzusammensetzung nach einem der vorhergehenden Ansprüche,
dadurch gekennzeichnet,
daß die anorganischen Pigmentteilchen Teilchen von Rutil-Titandioxid sind.

6. Wäßrige Farbzusammensetzung nach einem der vorhergehenden Ansprüche,
dadurch gekennzeichnet,
daß die anorganischen Pigmentteilchen Teilchen von Titandioxid mit einer Beschichtung eines anorganischen Oxids, eines Phosphats oder eines Silikats sind.

7. Wäßrige Farbzusammensetzung nach einem der Ansprüche 1 bis 4,
dadurch gekennzeichnet,
daß die anorganischen Pigmentteilchen Teilchen von Anatas-Titandioxid mit einer mittleren Kristallgröße zwischen 0,10 und 0,35 Mikrometer sind.

8. Wäßrige Farbzusammensetzung nach einem der vorhergehenden Ansprüche,
dadurch gekennzeichnet,
daß die anorganischen Pigmentteilchen Teilchen von Rutil-Titandioxid mit einer mittleren Kristallgröße zwischen 0,20 und 0,30 Mikrometer sind.

9. Wäßrige Farbzusammensetzung nach einem der vorhergehenden Ansprüche,
dadurch gekennzeichnet,
daß das zweite organische Polymer eine Glasübergangstemperatur größer als 30 °C aufweist.

10. Wäßrige Farbzusammensetzung nach einem der vorhergehenden Ansprüche,
dadurch gekennzeichnet,
daß die Teilchen des zweiten organischen Polymers Vesikel enthalten oder hohl sind.

11. Wäßrige Farbzusammensetzung nach einem der vorhergehenden Ansprüche,
dadurch gekennzeichnet,
daß die Teilchen des zweiten organischen Polymers eine mittlere Größe im Bereich von 0,02 bis 0,30 Mikrometer aufweisen.

12. Wäßrige Farbzusammensetzung nach einem der vorhergehenden Ansprüche,
dadurch gekennzeichnet,
daß die anorganischen Pigmentteilchen Teilchen von Titandioxid sind und die Teilchen des zweiten organischen Polymers eine mittlere Größe von 0,02 bis 0,20 Mikrometer aufweisen.

13. Wäßrige Farbzusammensetzung nach einem der Ansprüche 1 bis 10,
dadurch gekennzeichnet,
daß die Teilchen des zweiten organischen Polymers eine mittlere Größe zwischen 0,20 und 0,50 Mikrometer aufweisen.

14. Wäßrige Farbzusammensetzung nach Anspruch 8,
dadurch gekennzeichnet,
daß die Teilchen des zweiten organischen Polymers Polystyrolteilchen mit einer mittleren Größe zwischen 0,08 und 0,12 Mikrometer sind das Verhältnis von Polystyrol zu Titandioxid in dem Verbundpigment von 0,3:1 bis 2,6:1 nach Volumen beträgt.

15. Wäßrige Farbzusammensetzung nach Anspruch 8,
dadurch gekennzeichnet,
daß die Teilchen des zweiten organischen Polymers Polystyrolteilchen mit einer mittleren Teilchengröße zwischen 0,04 und 0,08 Mikrometer sind und das Verhältnis von Polystyrol zu Titandioxid in dem Verbundpigment von 0,1:1 bis 1,3:1 nach Volumen beträgt.

16. Wäßrige Farbzusammensetzung nach Anspruch 8,
dadurch gekennzeichnet,
daß die Teilchen des zweiten organischen Polymers Polystyrolteilchen mit einer mittleren Teilchengröße zwischen 0,20 und 0,40 Mikrometer sind und das Verhältnis von Polystyrol zu Titandioxid in dem Verbundpigment von 0,4:1 bis 3,0:1 nach Volumen beträgt.

17. Wäßrige Farbzusammensetzung nach Anspruch 1,
dadurch gekennzeichnet,
daß die Teilchen des zweiten organischen Polymers eine mittlere Größe von 0,02 bis 0,20 Mikrometer aufweisen und die Farbe eine Partikel-Volumenkonzentration von 60 Prozent bis 90 Prozent aufweist.

18. Wäßrige Farbzusammensetzung nach Anspruch 1,
dadurch gekennzeichnet,
daß die Teilchen des zweiten organischen Polymers eine mittlere Größe im Bereich von 0,20 bis 0,50 Mikrometer aufweisen und die Farbe eine Partikel-Volumenkonzentration von 60 Prozent bis 80 Prozent aufweist.

19. Wäßrige Farbzusammensetzung nach einem der vorhergehenden Ansprüche,
dadurch gekennzeichnet,
daß die Farbe Silika, ein Silikat, ein Aluminat, ein Sulfat, ein Carbonat oder einen Ton enthält.

20. Wäßrige Farbzusammensetzung nach einem der vorhergehenden Ansprüche,
dadurch gekennzeichnet,
daß die Farbe eine Pigmentvolumenkonzentration von 5 Prozent bis 30 Prozent, eine Korn-Volumenkonzentration von 5 Prozent bis 20 Prozent und eine Verdünnungsmittel-Volumenkonzentration von 15 Prozent bis 70 Prozent aufweist.

21. Wäßrige Farbzusammensetzung nach Anspruch 1,
dadurch gekennzeichnet,
daß die Teilchen des zweiten organischen Polymers eine mittlere Teilchengröße im Bereich von 0,02 bis 0,20 Mikrometer aufweisen und die Farbe eine Pigment-Volumenkonzentration im Bereich von 7 Prozent bis 25 Prozent, eine Korn-Volumenkonzentration im Bereich von 10 Prozent bis 20 Prozent und eine Verdünnungsmittel-Volumenkonzentration im Bereich von 20 Prozent bis 50 Prozent aufweist.

22. Wäßrige Farbzusammensetzung nach Anspruch 1,
dadurch gekennzeichnet,
daß die Teilchen des zweiten organischen Polymers eine mittlere Teilchengröße im Bereich von 0,20 bis 0,40 Mikrometer aufweisen und die Farbe eine Pigment-Volumenkonzentration im Bereich von 5 bis 25 Prozent, eine Korn-Volumenkonzentration im Bereich von 7 Prozent bis 15 Prozent und eine Verdünnungsmittel-Volumenkonzentration im Bereich von 30 Prozent bis 60 Prozent aufweist.

## Revendications

1. Composition de peinture aqueuse comprenant une émulsion aqueuse d'un premier polymère organique formant un film et un pigment composite, caractérisée en ce que le pigment composite est un composite structuré de particules pigmentaires inorganiques et de particules d'un second polymère organique, ledit second polymère organique étant un polymère ne formant pas un film et ladite composition de peinture aqueuse présente une concentration volumique particulaire supérieure à 55 pour-cent.

2. Composition de peinture aqueuse selon la revendication 1, caractérisée en ce que le premier polymère organique formant un film présente une température minimale de formation du film mesurée selon ASTM D2354 inférieure à 25°C.

3. Composition de peinture aqueuse selon la revendication I ou 2, caractérisée en ce que le composite structuré est formé par l'interaction d'une dispersion de particules pigmentaires inorganiques ayant une charge de surface avec des particules d'un polymère organique ayant une charge de surface opposée pour former une dispersion d'un composite structuré, dans laquelle les constituants particulaires sont maintenus en association par les charges de surface opposées sur les particules.

4. Composition de peinture aqueuse selon la revendication 3, caractérisée en ce que le pH de la dispersion du composite structuré est ajusté à une valeur dans l'intervalle de 7 à 9 après que le composite structuré est formé.

5. Composition de peinture aqueuse selon l'une quelconque des revendications précédentes, caractérisée en ce que les particules pigmentaires inorganiques sont des particules de dioxyde de titane rutile.

6. Composition de peinture aqueuse selon l'une quelconque des revendications précédentes, caractérisée en ce que les particules pigmentaires inorganiques sont des particules de dioxyde de titane ayant un revêtement d'un oxyde inorganique, d'un phosphate ou d'un silicate

7. Composition de peinture aqueuse selon l'une quelconque des revendications 1 à 4. caractérisée en ce que les particules pigmentaires inorganiques sont des particules de dioxyde de titane anatase ayant une taille moyenne de cristaux comprise entre 0,10 et 0,35 micromètre.

8. Composition de peinture aqueuse selon l'une quelconque des revendications précédentes, caractérisée en ce que les particules pigmentaires inorganiques sont des particules de dioxyde de titane rutile ayant une taille moyenne de cristaux comprise entre 0,20 et 0,30 micromètre.

9. Composition de peinture aqueuse selon l'une quelconque des revendications précédentes, caractérisée en ce que le second polymère organique présente une température de transition vitreuse supérieure à 30°C.

10. Composition de peinture aqueuse selon l'une quelconque des revendications précédentes, caractérisée en ce que les particules du second polymère organique sont vésiculaires ou creuses.

11. Composition de peinture aqueuse selon l'une quelconque des revendications précédentes, caractérisée en ce que les particules du second polymère organique présentent une taille moyenne dans l'intervalle de 0,02 à 0,30 micromètre.

12. Composition de peinture aqueuse selon l'une quelconque des revendications précédentes, caractérisée en ce que les particules pigmentaires inorganiques sont des particules de dioxyde de titane et les particules du second polymère organique présentent une taille moyenne de 0,02 à 0.20 micromètre.

13. Composition de peinture aqueuse selon l'une quelconque des revendications 1 à 10, caractérisée en ce que les particules du second polymère organique présentent une taille moyenne comprise entre 0,20 et 0,50 micromètre.

14. Composition de peinture aqueuse selon la revendication 8, caractérisée en ce que les particules du second polymère organique sont des particules de polystyrène ayant une taille moyenne comprise entre 0,08 et 0,12 micromètre et le rapport de polystyrène au dioxyde de titane dans le pigment composite est de 0,3:1 à 2,6:1 en volume.

15. Composition de peinture aqueuse selon la revendication 8, caractérisée en ce que les particules du second polymère organique sont des particules de polystyrène ayant une taille moyenne de particules comprise entre 0,04 et 0,08 micromètre et le rapport de polystyrène au dioxyde de titane dans le pigment composite est de 0,1:1 à 1,3:1 en volume.

16. Composition de peinture aqueuse selon la revendication 8, caractérisée en ce que les particules du second polymère organique sont des particules de polystyrène ayant une taille moyenne de particules comprise entre 0,20 et 0,40 micromètre et le rapport de polystyrène au dioxyde de titane dans le pigment composite est de 0,4:1 à 3,0:1 en volume.

17. Composition de peinture aqueuse selon la revendication 1, caractérisée en ce que les particules des particules du second polymère organique présentent une taille moyenne comprise entre 0,02 et 0,20 microns et la peinture présente une concentration volumique particulaire de 60 pour-cent à 90 pour-cent.

18. Composition de peinture aqueuse selon la revendication 1, caractérisée en ce que les particules du second polymère organique présentent une taille moyenne dans l'intervalle de 0,20 à 0,50 micromètre et la peinture présente une concentration volumique particulaire de 60 pour-cent à 80 pour-cent.

19. Composition de peinture aqueuse selon l'une quelconque des revendications précédentes, caractérisée en ce que la peinture contient de la silice, un silicate, un aluminate, un sulfate, un carbonate ou un argile.

20. Composition de peinture aqueuse selon l'une quelconque des revendications précédentes, caractérisée en ce que la peinture présente une concentration volumique de pigment de 5 pour-cent à 30 pour-cent, une concentration volumique de billes de 5 pour-cent à 20 pour-cent et une concentration volumique de charge de 15 pour-cent à 70 pour-cent.

21. Composition de peinture aqueuse selon la revendication 1, caractérisée en ce que les particules du second polymère organique présentent une taille moyenne de particules dans l'intervalle de 0,02 à 0,20 micromètre et la peinture présente une concentration volumique de pigment dans l'intervalle de 7 pour-cent à 25 pour-cent, une concentration volumique de billes dans l'intervalle de 10 pour-cent à 20 pour-cent et une concentration volumique de charge dans l'intervalle de 20 pour-cent à 50 pour-cent.

22. Composition de peinture aqueuse selon la revendication 1, caractérisée en ce que les particules du second polymère organique présentent une taille moyenne de particules dans l'intervalle de 0,20 à 0,40 micromètre et la peinture présente une concentration volumique de pigment dans l'intervalle de 5 à 25 pour-cent, une concentration volumique de billes dans l'intervalle de 7 pour-cent à 15 pour-cent et une concentration volumique de charge dans l'intervalle de 30 pour-cent à 60 pour-cent.
